# EUROPÄISCHE PATENTSCHRIFT

(11) **EP 2 607 851 B1**
(45) Veröffentlichungstag und Bekanntmachung des Hinweises auf die Patenterteilung: **24.08.2016**
(21) Anmeldenummer: 11194713.1
(22) Anmeldetag: 20.12.2011
(51) Int. Cl.: G01C 21/32, G01C 21/36

(54) **Verfahren zum Betreiben einer Navigationseinrichtung mit separat aktualisierbaren Geschwindigkeitsdaten**
Method for operating a navigation device with speed data that can be updated separately
Procédé de fonctionnement d'un dispositif de navigation doté de données de vitesse actualisables séparément

(43) Veröffentlichungstag der Anmeldung: 26.06.2013
(60) Teilanmeldung: 13183490.5
(73) Patentinhaber: TechniSat Digital GmbH, 01156 Dresden (DE)
(72) Erfinder: Förster, Thomas, 01454 Radeberg (DE); Glorius, Nico, 01279 Dresden (DE); Kolanko, Jan, 01157 Dresden (DE); Münzner, Christian, 01309 Dresden (DE)

(56) Entgegenhaltungen:
- WO-A1-2009/157278
- US-A1- 2010 207 751

## Beschreibung

Die Erfindung betrifft ein Verfahren zum Betreiben einer Navigationseinrichtung mit separat aktualisierbaren Geschwindigkeitsdaten und eine Navigationseinrichtung zum Ausführen des Verfahrens.

US 2010/0207751 A1 beschreibt ein Verfahren zum Betrachten und Korrigieren von Daten in einer Straßenkartendatenbank

, sowie ein Verfahren zum Anzeigen einer Warnung, wenn eine für ein Straßensegment gespeicherte Geschwindigkeitsbeschränkung überschritten wird. Ferner offenbart WO 2009/157278 A1 eine Navigationseinrichtung mit Referenzdatenbanken, die Suchdatenbanken aufweisen, welche referenziert werden, wenn die Navigationseinrichtung eine Suche nach einer Position auf einer Landkarte ausführt , und welche bevorzugt aktualisiert werden.

Eine herkömmliche Navigationseinrichtung kann unter Verwendung von Landkartendaten eine Route berechnen, welche von einer Position der Navigationseinrichtung zu einer Zielposition führt. Die Position der Navigationseinrichtung wird meist unter Verwendung eines Satellitennavigationssystems bestimmt, beispielsweise unter Verwendung von GPS, GLONASS, COMPASS oder GALILEO. Dazu empfängt die Navigationseinrichtung mit Hilfe einer Satellitenantenne die Signale mehrerer geostationärer Satelliten und wertet diese Signale aus. Die Zielposition wird in der Regel aus einem Ziel bestimmt, das ein Benutzer der Navigationseinrichtung über eine Eingabeeinheit in die Navigationseinrichtung eingibt.

Die Route kann mittels einer Recheneinheit der Navigationseinrichtung berechnet werden, welche einen Routen-Berechnungsalgorithmus ausführt. Bei der Routenberechnung werden Landkartendaten verwendet, welche Objekte und den Objekten zugeordnete Informationen repräsentieren, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Ortschaften und Geschwindigkeitsbegrenzungen. Die Landkartendaten sind in der Regel in einer nichtflüchtigen Speichereinheit der Navigationseinrichtung abgelegt, beispielsweise auf einer CD-ROM, auf einer Festplatte oder in einem Flash-Speicher.

Die berechnete Route oder ein Abschnitt der berechneten Route kann auf einem der Navigationseinrichtung zugeordneten Bildschirm angezeigt werden. Dadurch kann der Benutzer der Navigationseinrichtung eine räumliche Vorstellung von der Route oder von einem vor ihm liegenden Routenabschnitt entwickeln, was ihm beispielsweise ermöglicht, Fahrmanöver vorausschauend zu planen.

Ferner kann nach der Routenberechnung eine Zielführung gestartet werden. Als Zielführung bezeichnet man einen Prozess, der einen Benutzer der Navigationseinrichtung entlang der Route leitet. Während der Zielführung kann die Navigationseinrichtung optische und akustische Fahranweisungen an den Benutzer ausgeben, die anhand der Route und der aktuellen Position der Navigationseinrichtung generiert werden.

Heutzutage sind Navigationseinrichtungen oft in Fahrzeugen eingebaut. Dadurch wird den Benutzern solcher Navigationseinrichtungen das Führen ihrer Fahrzeuge erleichtert. Daneben erhöhen die Navigationseinrichtungen die Verkehrssicherheit, da die Benutzer in Gebieten, die ihnen unbekannt sind, nicht durch die Suche nach zu fahrenden Strecken abgelenkt werden, sondern sich voll auf das Verkehrsgeschehen konzentrieren können.

In Fahrzeugen eingebaute Navigationseinrichtungen bieten aber noch weitere Möglichkeiten zur Fahrerunterstützung. Beispielsweise kann ein Fahrzeugführer von einer Navigationseinrichtung auf Geschwindigkeitsbegrenzungen hingewiesen werden. Damit soll vermieden werden, dass der Fahrzeugführer eine Geschwindigkeitsbegrenzung übersieht und dadurch mit unangepasster Geschwindigkeit fährt. Die für die Hinweise zu Geschwindigkeitsbegrenzungen benötigten Geschwindigkeitsdaten können aus unterschiedlichen Quellen stammen, beispielsweise von einem Bilderkennungssystem oder aus den Landkartendaten der Navigationseinrichtung. Beides ist jedoch mit Problemen verbunden, die im Folgenden beschrieben werden:

Mit derzeit bekannten Bilderkennungssystemen ist es nicht möglich, den Beginn einer Geschwindigkeitsbegrenzung, der beispielsweise durch ein Verkehrsschild angezeigt wird, immer sicher zu erkennen. Die verwendeten Erkennungsverfahren sind dafür generell zu fehleranfällig. Ferner erkennen derzeit bekannte Bilderkennungssysteme das Ende von Geschwindigkeitsbegrenzungen nicht zuverlässig. Erschwerend wirken dabei insbesondere länderspezifische Regelungen bezüglich des Aufhebens von Geschwindigkeitsbegrenzungen. Dadurch sind die von Bilderkennungssystemen gelieferten Geschwindigkeitsdaten häufig fehlerhaft.

Alternativ dazu können die Geschwindigkeitsdaten aus den Landkartendaten der Navigationseinrichtung bezogen werden, da die Geschwindigkeitsdaten ein Bestandteil der Landkartendaten sind. (siehe z.B. US2010/0207751 A1).

Allerdings sind die auf diese Weise bezogenen Geschwindigkeitsdaten oftmals veraltet. Der Grund dafür ist die mangelnde Aktualität der Landkartendaten, welche größtenteils auf die hohen Kosten und den Zeitaufwand des Aktualisierens der Landkartendaten ("Kartenupdate") zurückzuführen ist. Insbesondere besteht seitens eines Benutzers einer Navigationseinrichtung dann kein Interesse an einem neuen Kartenupdate, wenn die für den Benutzer relevanten Straßenverläufe seit dem letzten Kartenupdate unverändert geblieben sind.

Die mangelnde Aktualität der Landkartendaten ist außerdem in dem großen Zeitraum von etwa einem Jahr begründet, welcher zwischen dem Digitalisieren von Landkartendatenänderungen durch einen Lieferanten von Landkarten-Rohdaten und dem Bereitstellen eines entsprechenden Kartenupdates für Navigationseinrichtungen vergeht.

Für den Benutzer einer Navigationseinrichtung ist es aber wünschenswert, dass die Navigationseinrichtung immer mit aktuellen Geschwindigkeitsdaten ausgestattet ist, damit sich der Benutzer stets auf die von der Navigationseinrichtung ausgegebenen Hinweise zu Geschwindigkeitsbegrenzungen verlassen kann. Um dies zu erreichen, ist ein häufiges Aktualisieren der Geschwindigkeitsdaten der Navigationseinrichtung notwendig. Insbesondere müssen die Geschwindigkeitsdaten öfter als andere Landkartendaten aktualisiert werden, da Geschwindigkeitsbegrenzungen besonders häufig geändert werden.

Allerdings erfordert das Aktualisieren der Geschwindigkeitsdaten einer herkömmlichen Navigationseinrichtung ein zeitaufwendiges und kostenintensives Aktualisieren der gesamten Landkartendaten der Navigationseinrichtung. (siehe z.B. WO2009/157278 A1).

Das Aktualisieren nur der Geschwindigkeitsdaten, ohne die gesamten Landkartendaten zu aktualisieren, ist bei einer herkömmlichen Navigationseinrichtung nicht vorgesehen. Das ist unter anderem in der mangelnden Referenzierbarkeit zwischen verschiedenen Landkartendaten-Versionen begründet, welche zu verschiedenen Zeitpunkten erstellt wurden oder von verschiedenen Landkartendaten-Lieferanten stammen. Die mangelnde Referenzierbarkeit würde nämlich zu Fehlern beim Zuordnen von Geschwindigkeitsbegrenzungen zu Straßensegmenten führen, was im Folgenden näher erläutert wird:

Beim Erstellen von Landkartendaten für eine Navigationseinrichtung werden Abbildungen von Straßen erzeugt, welche digitale Gegenstücke zu real existierenden Straßen darstellen und deren Eigenschaften repräsentieren, wie beispielsweise Straßenlängen, Straßenverläufe, Straßennamen, Geschwindigkeitsbegrenzungen und verschiedene andere Eigenschaften, die zwischen unterschiedlichen Landkartendaten-Lieferanten variieren können.

Zum Abbilden realer Straßenverläufe in den Landkartendaten werden die Straßen in eine Mehrzahl von Straßensegmenten gegliedert, denen jeweils zwei Knotenpunkte und optional ein oder mehrere Stützpunkte zugeordnet sind. Die Knotenpunkte repräsentieren feste Punkte der Straßen, beispielsweise Kreuzungen, Geltungsbereiche von Geschwindigkeitsbegrenzungen oder Wechsel von Straßenklassen. Die Stützpunkte kennzeichnen die Straßenverläufe zwischen den Knotenpunkten. Die Knotenpunkte und die Stützpunkte eines Straßensegments lassen sich durch Vektoren verbinden, welche das jeweilige Straßensegment oder einen Abschnitt des jeweiligen Straßensegments modellhaft abbilden.

Beim Erstellen einer neuen Version von Landkartendaten, beispielsweise neuer Geschwindigkeitsdaten, werden die Straßen in eine Mehrzahl von Straßensegmenten gegliedert, die sich von der oben genannten Mehrzahl von Straßensegmenten unterscheidet. Das heißt, die neue Straßengliederung unterscheidet sich von der vorigen Straßengliederung. Das ist darauf zurückzuführen, dass sich in der Zeit zwischen dem Erstellen der vorigen Landkartendaten und dem Erstellen der neuen Geschwindigkeitsdaten einige Straßenverläufe geändert haben, Straßenabschnitte abgerissen wurden oder Straßenabschnitte neu gebaut wurden, wodurch sich die Anzahl und die Gliederung der Straßensegmente verändert haben.

Deshalb lässt sich nicht jedes Straßensegment der neuen Geschwindigkeitsdaten einem Straßensegment der vorhergehenden Landkartendaten eindeutig zuordnen. Mit anderen Worten gibt es keine eindeutige Referenzierbarkeit zwischen den Straßensegmenten der neuen Geschwindigkeitsdaten und den Straßensegmenten der vorhergehenden Landkartendaten.

Infolgedessen würden beim Verwenden der neuen Geschwindigkeitsdaten gemeinsam mit den vorigen Landkartendaten, beispielsweise bei einer Zielführung, Zuordnungsfehler auftreten. Das heißt, die neuen Geschwindigkeitsinformationen würden den Straßensegmenten der vorigen Landkartendaten nicht immer korrekt zugeordnet. Dadurch würden falsche Hinweise zu Geschwindigkeitsbegrenzungen generiert und an einen Benutzer der Navigationseinrichtung ausgegeben.

Somit stellt sich die Aufgabe, ein Verfahren bereitzustellen, mit dem Geschwindigkeitsdaten einer Navigationseinrichtung getrennt von anderen Landkartendaten der Navigationseinrichtung aktualisiert werden können, sodass an einen Benutzer der Navigationseinrichtung ausgegebene Hinweise zu Geschwindigkeitsbegrenzungen korrekt sind.

Die Aufgabe wird mit dem erfindungsgemäßen Verfahren zum Betreiben einer Navigationseinrichtung gelöst, welche über folgende Bestandteile verfügt:
eine Landkartendatenbank, welche Landkartendaten aufweist, die einer ersten Mehrzahl von Straßensegmenten zugeordnet sind, in welche die Straßen eines Gebiets gegliedert sind, wobei die Landkartendaten Identifikationsmerkmale aufweisen, sodass jedem der Straßensegmente der ersten Mehrzahl von Straßensegmenten eines der Identifikationsmerkmale zugeordnet ist,
eine Geschwindigkeitsdatenbank, welche Geschwindigkeitsdaten aufweist, die einer zweiten Mehrzahl von Straßensegmenten zugeordnet sind, in welche die Straßen des Gebiets gegliedert sind, wobei die Geschwindigkeitsdaten Geschwindigkeitsinformationen aufweisen, sodass jedem der Straßensegmente der zweiten Mehrzahl von Straßensegmenten eine der Geschwindigkeitsinformationen zugeordnet ist, und
eine Referenzdatenbank.

Das erfindungsgemäße Verfahren weist folgende Schritte auf:
Bestimmen einer Position der Navigationseinrichtung,
Definieren eines in dem Gebiet angeordneten Auswahlbereichs unter Berücksichtigung der Position,
Auswählen eines Ausgangsstraßensegments aus denjenigen Straßensegmenten der ersten Mehrzahl von Straßensegmenten, die in dem Auswahlbereich angeordnet sind,
Auswählen eines auf dem Ausgangsstraßensegment angeordneten Referenzstraßensegments aus der zweiten Mehrzahl von Straßensegmenten und
Speichern des Identifikationsmerkmals des Ausgangsstraßensegments und der Geschwindigkeitsinformation des Referenzstraßensegments in der Referenzdatenbank, sodass das Identifikationsmerkmal des Ausgangsstraßensegments mit der Geschwindigkeitsinformation des Referenzstraßensegments verknüpft wird.

Gemäß dem vorgestellten Verfahren ist die Navigationseinrichtung zusätzlich zu der Landkartendatenbank mit einer Geschwindigkeitsdatenbank ausgestattet. Dadurch können die in der Geschwindigkeitsdatenbank gespeicherten Geschwindigkeitsdaten getrennt von den in der Landkartendatenbank gespeicherten Landkartendaten, also separat, aktualisiert werden. Das heißt, die Geschwindigkeitsdaten können aktualisiert werden, ohne auf die Landkartendaten der Landkartendatenbank zuzugreifen beziehungsweise diese zu verändern. Damit kann ein Update-Mechanismus völlig anderer Art als bei herkömmlichen Navigationseinrichtungen eingesetzt werden.

Die Geschwindigkeitsdaten der Geschwindigkeitsdatenbank können derart beschaffen sein, dass sie lediglich Informationen zu Straßenverläufen und diesen zugeordnete Geschwindigkeitsinformationen aufweisen. Somit ist der Inhalt der Geschwindigkeitsdatenbank auf die notwendigsten Informationen reduziert. Dadurch haben die Geschwindigkeitsdaten einen vergleichsweise deutlich geringeren Umfang als herkömmliche Landkartendaten. Aufgrund dessen lassen sich die Geschwindigkeitsdaten der Geschwindigkeitsdatenbank besonders schnell und kostengünstig aktualisieren.

Ferner wird gemäß dem vorgestellten Verfahren ein Straßensegment der zweiten Mehrzahl von Straßensegmenten als Referenzstraßensegment ausgewählt, welches auf dem Ausgangsstraßensegment angeordnet ist. Dadurch wird dem Ausgangsstraßensegment ein Straßensegment der zweiten Mehrzahl von Straßensegmenten als Referenzstraßensegment zugeordnet, welches den gleichen Straßenabschnitt wie das Ausgangsstraßensegment oder wenigstens einen Teil dieses Straßenabschnitts repräsentiert. Damit ist die Grundlage für eine korrekte Zuordnung der Geschwindigkeitsinformation des Referenzstraßensegments zu dem Ausgangsstraßensegment geschaffen.

Mit dem Ausführen des vorgestellten Verfahrens für eine Vielzahl von Straßensegmenten der ersten Mehrzahl von Straßensegmenten wird ein Abgleich ("Matching") zwischen den Straßengeometrien, welche den Landkartendaten der Landkartendatenbank zugrunde liegen, und den Straßengeometrien, welche den Geschwindigkeitsdaten der Geschwindigkeitsdatenbank zugrunde liegen, durchgeführt. Auf diese Weise wird sichergestellt, dass den Straßensegmenten der Landkartendatenbank trotz der unterschiedlichen Straßengeometrien die richtigen Geschwindigkeitsinformationen zugeordnet werden können.

Gemäß dem vorgestellten Verfahren wird das aufwendige Matching der Straßengeometrien nicht für das gesamte Gebiet durchgeführt, sondern nur für den innerhalb des Gebiets angeordneten Auswahlbereich. Damit kann das Matching auf einen Bereich beschränkt werden, der für den Benutzer der Navigationseinrichtung tatsächlich relevant ist. Trotz der Beschränkung kann die Navigationseinrichtung in der Geschwindigkeitsdatenbank aktuelle Geschwindigkeitsdaten für das gesamte Gebiet vorhalten, welche bei Bedarf verwendet werden können.

Gemäß dem vorgestellten Verfahren werden das Identifikationsmerkmal des Ausgangsstraßensegments und die Geschwindigkeitsinformation des Referenzstraßensegments in der Referenzdatenbank gespeichert, sodass beide miteinander verknüpft werden. Auf diese Weise wird die bei dem Matching gefundene Beziehung zwischen dem Ausgangsstraßensegment und dem Referenzstraßensegment dauerhaft festgehalten, sodass auch später, beispielsweise bei einer Zielführung, dem Ausgangsstraßensegment die richtige Geschwindigkeitsinformation zugeordnet werden kann.

Das Zuordnen der Geschwindigkeitsinformation zu dem Ausgangsstraßensegment kann innerhalb kürzester Zeit erfolgen, weil dazu lediglich das Identifikationsmerkmal des Ausgangsstraßensegments in der Referenzdatenbank aufgesucht werden muss, sodass die zugehörige Geschwindigkeitsinformation aus der Referenzdatenbank ausgelesen werden kann.

Damit ermöglicht das vorgestellte Verfahren ein fehlerfreies paralleles Verwenden von Landkartendaten und Geschwindigkeitsdaten einer Navigationseinrichtung, wobei die Geschwindigkeitsdaten der Geschwindigkeitsdatenbank neuer als die Landkartendaten der Landkartendatenbank sind oder von einem anderen Lieferanten stammen. Insbesondere können mit dem Verfahren auch dann korrekte Hinweise zu Geschwindigkeitsbegrenzungen ausgegeben werden, wenn die Geschwindigkeitsdaten auf einer anderen Straßengliederung als die Landkartendaten beruhen.

Ferner wird eine Navigationseinrichtung gemäß der Erfindung bereitgestellt. Die Navigationseinrichtung weist folgende Bestandteile auf:
eine Positionsbestimmungseinheit, welche zum Bestimmen einer Position der Navigationseinrichtung eingerichtet ist,
eine Landkartendatenbank mit Landkartendaten, die eine erste Mehrzahl von Straßensegmenten repräsentieren, in welche die Straßen eines Gebiets gegliedert sind, wobei die Landkartendaten Identifikationsmerkmale aufweisen, sodass jedem der Straßensegmente der ersten Mehrzahl von Straßensegmenten eines der Identifikationsmerkmale zugeordnet ist,
eine Geschwindigkeitsdatenbank mit Geschwindigkeitsdaten, die eine zweite Mehrzahl von Straßensegmenten repräsentieren, in welche die Straßen des Gebiets gegliedert sind, wobei die Geschwindigkeitsdaten Geschwindigkeitsinformationen aufweisen, sodass jedem der Straßensegmente der zweiten Mehrzahl von Straßensegmenten eine der Geschwindigkeitsinformationen zugeordnet ist,
eine Recheneinheit, welche zum Definieren eines in dem Gebiet angeordneten Auswahlbereichs unter Berücksichtigung der Position, zum Auswählen eines Ausgangsstraßensegments aus denjenigen Straßensegmenten der ersten Mehrzahl von Straßensegmenten, die in dem Auswahlbereich angeordnet sind, und zum Auswählen eines auf dem Ausgangsstraßensegment angeordneten Referenzstraßensegments aus der zweiten Mehrzahl von Straßensegmenten eingerichtet ist, und
eine Referenzdatenbank, welche zum Speichern des Identifikationsmerkmals des Ausgangsstraßensegments und der Geschwindigkeitsinformation des Referenzstraßensegments eingerichtet ist, sodass das Identifikationsmerkmal des Ausgangsstraßensegments mit der Geschwindigkeitsinformation des Referenzstraßensegments verknüpft wird.

Neben den vorangehend beschriebenen Ausführungsformen der Erfindung werden weitere Ausführungsformen der Erfindung bereitgestellt, welche in den Patentansprüchen aufgeführt sind.

Im Folgenden wird die Erfindung bezugnehmend auf die folgenden Figuren näher erläutert:
Figur 1 zeigt ein Blockschaltbild einer Navigationseinrichtung gemäß einer Ausführungsform der Erfindung.
Die Figuren 2 bis 5 zeigen jeweils einen Landkartenausschnitt zum Erläutern einer Ausführungsform des erfindungsgemäßen Verfahrens.

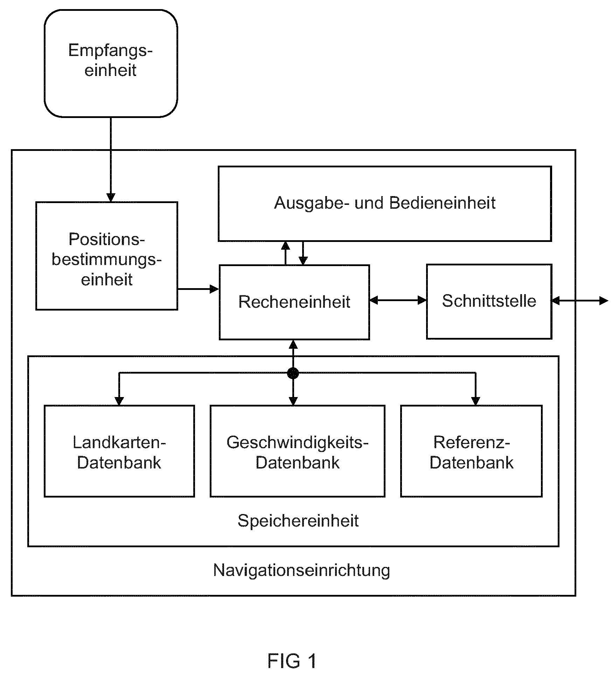

Figur 1 zeigt ein Blockschaltbild einer Navigationseinrichtung gemäß einer Ausführungsform der Erfindung.

Die Navigationseinrichtung weist mehrere Funktionsmodule auf, die als Rechtecke dargestellt sind. Jedes der Funktionsmodule kann mittels eines separaten integrierten Schaltkreises realisiert sein. Alternativ dazu können auch mehrere der gezeigten Funktionsmodule in einem integrierten Schaltkreis vereinigt sein oder ein Funktionsmodul kann mittels mehrerer miteinander verbundener integrierter Schaltkreise realisiert sein. Ferner kann eines der Funktionsmodule auch als Software-Modul vorliegen, das von einem Prozessor ausführbar ist. Neben den in Figur 1 gezeigten Funktionsmodulen kann die Navigationseinrichtung noch weitere Funktionsmodule aufweisen.

Die Navigationseinrichtung verfügt über eine Positionsbestimmungseinheit in Form eines GPS-Empfängers, welcher mit einer Empfangseinheit in Form einer GPS-Antenne verbunden ist. Die Positionsbestimmungseinheit gewinnt Positionskoordinaten, welche eine geografische Position der Navigationseinrichtung repräsentieren, aus Satellitensignalen, welche mittels der Empfangseinheit empfangen werden, und übermittelt die Positionskoordinaten an eine Recheneinheit in Form eines Mikroprozessors.

Gemäß einer anderen Ausführungsform der Erfindung wird anstelle des GPS-Empfängers eine andere Art von Positionsbestimmungseinheit verwendet, beispielsweise ein GALILEO-Empfänger oder ein GLONASS-Empfänger, der mit einer passenden Empfangseinheit ausgestattet ist.

Die Recheneinheit ist unter anderem dazu in der Lage, von der Positionsbestimmungseinheit erhaltene Positionskoordinaten weiterzuverarbeiten, beispielsweise für eine Routenberechnung oder für eine Zielführung. Außerdem ist die Recheneinheit zum Definieren eines in dem Gebiet angeordneten Auswahlbereichs unter Berücksichtigung der Positionskoordinaten in der Lage. Mittels der Recheneinheit lässt sich ferner ein Ausgangsstraßensegment aus denjenigen Straßensegmenten der ersten Mehrzahl von Straßensegmenten auswählen, die in dem Auswahlbereich angeordnet sind. Mittels der Recheneinheit lässt sich weiterhin ein auf dem Ausgangsstraßensegment angeordnetes Straßensegment aus der zweiten Mehrzahl von Straßensegmenten als Referenzstraßensegment auswählen.

Die Recheneinheit ist mit einer Schnittstelle verbunden, welche unter anderem zum Übertragen von Geschwindigkeitsdaten in die Geschwindigkeitsdatenbank dient. Die Geschwindigkeitsdaten werden beispielsweise von einem externen Gerät in die Geschwindigkeitsdatenbank übertragen. Alternativ dazu können die Geschwindigkeitsdaten auch direkt aus dem Internet in die Geschwindigkeitsdatenbank geladen werden. Gemäß einer anderen Ausführungsform der Erfindung werden die Geschwindigkeitsdaten direkt von einem Speichermedium, das mit der Navigationseinrichtung verbunden ist, in die Geschwindigkeitsdatenbank übertragen. Beim Übertragen von Geschwindigkeitsdaten in die Geschwindigkeitsdatenbank werden in der Geschwindigkeitsdatenbank bereits enthaltene Geschwindigkeitsdaten in der Regel vollumfänglich aktualisiert.

Ferner verfügt die Navigationseinrichtung über eine Ausgabe- und Bedieneinheit, welche im vorliegenden Fall einen Berührungsbildschirm (Touchscreen) und eine Sprachausgabeeinrichtung aufweist. Die Ausgabe- und Bedieneinheit dient unter anderem zum Ausgeben von Umgebungsinformationen, Routeninformationen und Fahranweisungen an einen Benutzer der Navigationseinrichtung. Insbesondere kann mittels der Ausgabe- und Bedieneinheit ein Hinweis zu einer Geschwindigkeitsbegrenzung ausgegeben werden, indem ein Geschwindigkeitswert auf dem Berührungsbildschirm dargestellt wird oder über die Sprachausgabeeinrichtung als akustisches Signal wiedergegeben wird. Ferner erlaubt die Ausgabe- und Bedieneinheit das Eingeben von Bedienbefehlen durch einen Benutzer der Navigationseinrichtung.

Weiterhin weist die Navigationseinrichtung eine mit der Recheneinheit verbundene Speichereinheit in Form eines nichtflüchtigen Speichers auf. Im vorliegenden Fall handelt es sich dabei um einen Flash-Speicher. Alternativ dazu kann die Speichereinheit auch eine andere Form von Speicher sein, beispielsweise eine Festplatte. Die Speichereinheit weist eine Landkartendatenbank, eine Geschwindigkeitsdatenbank und eine Referenzdatenbank auf, die jeweils auf der Speichereinheit gespeichert sind.

Die Landkartendatenbank enthält Landkartendaten, welche beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen und Ortschaften repräsentieren, die sich in einem bestimmten Gebiet befinden. Zu den Landkartendaten der Landkartendatenbank können aber auch Geschwindigkeitsdaten gehören, welche Geschwindigkeitsbegrenzungen repräsentieren, die für bestimmte Straßen oder Straßenabschnitte des Gebiets gelten.
Des Weiteren weisen die Landkarten ein erstes Zeitdatum auf, welches die Aktualität der Landkartendaten kennzeichnet. Das erste Zeitdatum repräsentiert den Zeitpunkt, an dem letzte redaktionelle Änderungen an den Landkartendaten vorgenommen wurden, kann jedoch auch einen anderen Zeitpunkt repräsentieren.

Zum Abbilden der Straßen des Gebiets in den Landkartendaten sind die Straßen in eine erste Mehrzahl von Straßensegmenten gegliedert, wobei jedes der Straßensegmente durch zwei an seinen Enden angeordnete Knotenpunkte und optional einen Stützpunkt oder mehrere Stützpunkte, welche den Verlauf des Straßensegments zwischen den beiden Knotenpunkten approximieren, abgebildet wird. Die Knotenpunkte und Stützpunkte sind durch Vektoren verbunden, welche jeweils ein Straßensegment oder einen Abschnitt eines Straßensegments repräsentieren. Die Knotenpunkte und die Stützpunkte, oder die Vektoren, inklusive der ihnen zugeordneten geografische Koordinaten, sind Bestandteil der Landkartendaten der Landkartendatenbank.

Außerdem weisen die Landkartendaten der Landkartendatenbank Identifikationsmerkmale in Form von Identifikationsnummern auf, sodass jedem der Straßensegmente der ersten Mehrzahl von Straßensegmenten eine der Identifikationsnummern zugeordnet ist. Über eine solche Identifikationsnummer lässt sich das jeweilige Straßensegment genau referenzieren.

Die Geschwindigkeitsdatenbank weist Geschwindigkeitsdaten auf, welche in dem Gebiet angeordnete Straßen und auf diesen Straßen geltende Geschwindigkeitsbegrenzungen repräsentieren. Außerdem weisen die Geschwindigkeitsdaten ein zweites Zeitdatum auf, welches ihre Aktualität kennzeichnet. Das zweite Zeitdatum repräsentiert den Zeitpunkt, an dem letzte redaktionelle Änderungen an den Geschwindigkeitsdaten vorgenommen wurden, kann jedoch auch einen anderen Zeitpunkt repräsentieren.

Zum Abbilden der Straßen des Gebiets in den Geschwindigkeitsdaten sind die Straßen des Gebiets in eine zweite Mehrzahl von Straßensegmenten gegliedert, wobei jedes der Straßensegmente durch zwei an seinen Enden angeordnete Stützpunkte abgebildet wird. Die Stützpunkte sind durch Vektoren verbunden, welche jeweils ein Straßensegment repräsentieren. Die Stützpunkte oder die Vektoren, inklusive der ihnen zugeordneten geografischen Koordinaten, sind Bestandteil der Geschwindigkeitsdaten der Geschwindigkeitsdatenbank.

Die Geschwindigkeitsdaten der Geschwindigkeitsdatenbank haben im Vergleich zu den Landkartendaten der Landkartendatenbank einen deutlich geringeren Umfang. Dadurch kann ein Benutzer die Geschwindigkeitsdaten in sehr kurzer Zeit aktualisieren. Dazu lädt der Benutzer beispielsweise neue Geschwindigkeitsdaten aus dem Internet auf ein externes Gerät und überträgt diese dann über die Schnittstelle der Navigationseinrichtung in die Geschwindigkeitsdatenbank.

Die Referenzdatenbank, welche auch als "Differenzdatenbank" bezeichnet werden kann, ist zum Speichern von Geschwindigkeitsinformationen, die jeweils mit einem der Identifikationsmerkmale verknüpft sind, eingerichtet. Die Referenzdatenbank ist ferner derart eingerichtet, dass sich anhand einer in der Referenzdatenbank gespeicherten Identifikationsnummer eine mit der Identifikationsnummer verknüpfte Geschwindigkeitsinformation aus der Referenzdatenbank auslesen lässt.

Gemäß einer vorteilhaften Ausführungsform der Erfindung werden in der Referenzdatenbank gespeicherte Daten (Identifikationsnummern und Geschwindigkeitsinformationen) automatisch gelöscht, wenn die Landkartendaten der Landkartendatenbank aktualisiert wurden. Danach können mittels des erfindungsgemäßen Verfahrens neue Daten in die Referenzdatenbank gespeichert werden.

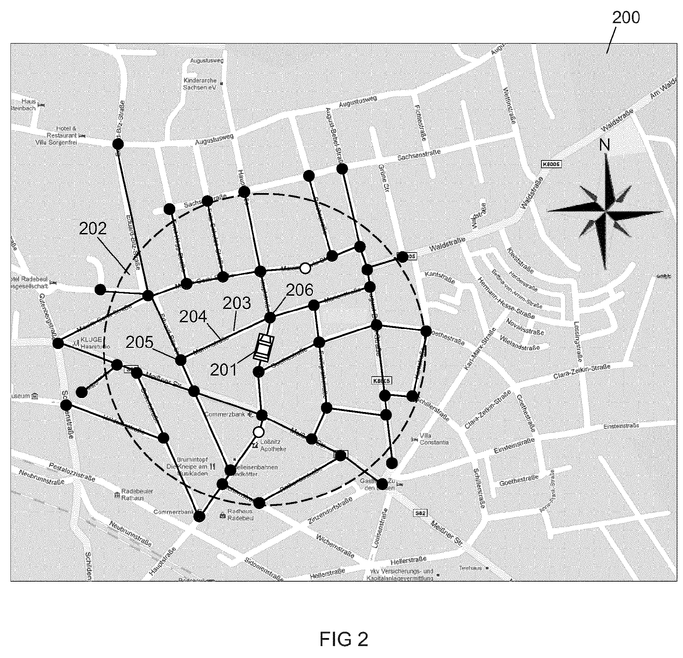

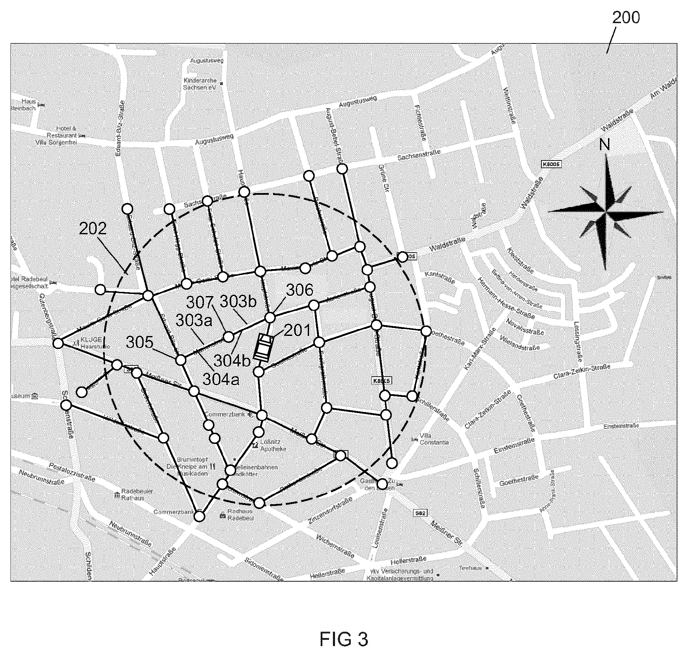

Im Folgenden wird auf die **Figuren 2** **und** **3** Bezug genommen, welche jeweils einen Landkartenausschnitt 200 zum Erläutern einer Ausführungsform des erfindungsgemäßen Verfahrens zeigen.

Der Landkartenausschnitt 200 repräsentiert einen rechteckförmigen Bereich des Gebiets Deutschlands und zeigt mehrere Straßen, die als weiße Streifen vor grauem Grund dargestellt sind. Außerdem zeigen die Figuren 2 und 3 jeweils ein Fahrzeugsymbol, das die Position 201 eines Fahrzeugs kennzeichnet, welches mit der erfindungsgemäßen Navigationseinrichtung aus Figur 1 ausgestattet ist. In der Landkartendatenbank der Navigationseinrichtung sind Landkartendaten gespeichert, die dem Gebiet Deutschlands zugeordnet sind und ein erstes Zeitdatum aufweisen. Daneben sind in der Geschwindigkeitsdatenbank der Navigationseinrichtung Geschwindigkeitsdaten gespeichert, die dem Gebiet Deutschlands zugeordnet sind und ein zweites Zeitdatum aufweisen.

Da die Landkartendaten der Landkartendatenbank mit einem ersten Zeitdatum versehen sind und die Geschwindigkeitsdaten der Geschwindigkeitsdatenbank mit einem zweiten Zeitdatum versehen sind, wird bei einem ersten Verfahrensschritt das erste Zeitdatum mit dem zweiten Zeitdatum verglichen. Wenn das erste Zeitdatum älter als das zweite Zeitdatum ist, wird das Verfahren fortgeführt. Wenn dagegen das erste Zeitdatum jünger als das zweite Zeitdatum ist, wird das Verfahren abgebrochen. Im vorliegenden Fall ist das erste Zeitdatum älter als das zweite Zeitdatum, sodass das Verfahren fortgeführt wird.

Bei einem zweiten Verfahrensschritt wird mittels der Positionsbestimmungseinheit der Navigationseinrichtung die geografische Position 201 des Fahrzeugs beziehungsweise der Navigationseinrichtung bestimmt und in Form von Positionskoordinaten zur Weiterverarbeitung an die Recheneinheit übertragen.

Bei einem dritten Verfahrensschritt wird mittels der Recheneinheit und unter Verwendung der Landkartendaten der Landkartendatenbank und der Position 201 ein Auswahlbereich 202 definiert, welcher innerhalb des Gebiets Deutschlands liegt. Der Auswahlbereich 202 ist derart ausgebildet, dass der Auswahlbereich 202 die Position 201 umgibt und kleiner als das Gebiet Deutschlands ist. Das heißt, die Grundfläche des Auswahlbereichs 202 ist kleiner als die Grundfläche des Gebiets Deutschlands. Ferner hat der Auswahlbereich 202 die Form eines Kreises mit einem vorgegebenen Radius. Außerdem ist der Auswahlbereich 202 so platziert, dass die Position 201 des Fahrzeugs beziehungsweise der Navigationseinrichtung im Zentrum des Kreises angeordnet ist. In den Figuren 2 und 3 wird der Auswahlbereich 202 jeweils durch eine unterbrochene Linie dargestellt, welche die Grenze des Auswahlbereichs 202 bildet.

Aufgrund der beschriebenen Form und Anordnung des Auswahlbereichs 202 werden später nur solche Daten in der Referenzdatenbank gespeichert, welche die Umgebung des Fahrzeugs betreffen. Somit wird der mit dem erfindungsgemäßen Verfahren betriebene Aufwand auf das notwendige Maß beschränkt.

Alternativ zu der beschriebenen Form und Anordnung des Auswahlbereichs 202 kann ein Auswahlbereich auch eine andere Form haben, beispielsweise die Form eines Quadrats, eines Rechtecks oder einer Ellipse, oder anders angeordnet sein, beispielsweise so, dass sich das Fahrzeug nicht im Zentrum des Auswahlbereichs befindet.
Gemäß einer anderen Ausführungsform der Erfindung ist ein Auswahlbereich derart ausgebildet, dass der Auswahlbereich eine von der Navigationseinrichtung berechnete Route umgibt. Mit anderen Worten ist die Route innerhalb des Auswahlbereichs angeordnet.

Gemäß einer besonders vorteilhaften Ausführungsform der Erfindung wird ein Auswahlbereich in einer Kreisform, einer Quadratform, einer Rechteckform, einer Ellipsenform oder in einer ähnlichen Form verwendet, wenn keine Zielführung aktiv ist. Wenn dagegen eine Zielführung aktiv ist, wird ein Auswahlbereich verwendet, welcher die Route umgibt, auf der die Zielführung basiert.

Figur 2 zeigt ferner die Knotenpunkte und die Stützpunkte der in dem Auswahlbereich 202 angeordneten Straßensegmente der ersten Mehrzahl von Straßensegmenten, wobei die Knotenpunkte als schwarze Punkte und die Stützpunkte als weiße Punkte mit schwarzem Rand dargestellt sind. Ferner sind die Vektoren, welche die gezeigten Knotenpunkte und Stützpunkte verbinden, als durchgängige schwarze Linien dargestellt. Wie Figur 2 verdeutlicht, gelten auch solche Straßensegmente als in dem Auswahlbereich 202 angeordnet, welche die Grenze des Auswahlbereichs 202 überqueren.

Vektoren, die zwei Knotenpunkte miteinander verbinden, repräsentieren jeweils ein Straßensegment der ersten Mehrzahl von Straßensegmenten. Dagegen repräsentieren Vektoren, die einen Knotenpunkt und einen Stützpunkt miteinander verbinden, jeweils nur einen Abschnitt eines Straßensegments der ersten Mehrzahl von Straßensegmenten.

Bei einem vierten Verfahrensschritt wird mittels der Recheneinheit aus den Straßensegmenten der ersten Mehrzahl von Straßensegmenten, die in dem Auswahlbereich 202 angeordnet sind, ein Ausgangsstraßensegment ausgewählt. Im vorliegenden Fall wird dazu aus den Landkartendaten der Landkartendatenbank der Vektor 204 ausgewählt, welcher das Straßensegment 203 repräsentiert und die beiden Knotenpunkte 205 und 206 verbindet. Alternativ dazu kann aus den Straßensegmenten der ersten Mehrzahl von Straßensegmenten, die in dem Auswahlbereich 202 angeordnet sind, auch ein beliebiges anderes Straßensegment als Ausgangsstraßensegment ausgewählt werden.

Die folgende Tabelle 1 gibt einige in der Landkartendatenbank gespeicherte Attribute des Ausgangsstraßensegments 203 wieder:

**Tab. 1: In der Landkartendatenbank gespeicherte Attribute des Ausgangsstraßensegments 203**

| | | | |
|---|---|---|---|
| **Identifikationsnr.:** | AB378E44 | | |
| **Knotenpunkte:** | 205, 206 | | |
| **Stützpunkte:** | keine | | |
| **Vektoren:** | 204 | | |
| **Länge:** | 300 m | | |
| **Geschwindigkeitsinformation:** | **Richtungsinformationen** | **Geltungsbereiche** | **Geschwindigkeitswerte** |
| | Richtung Knotenpkt. 206 | gesamte Länge | 50 km/h |
| | Richtung Knotenpkt. 205 | gesamte Länge | 50 km/h |

Gemäß Tabelle 1 ist dem Straßensegment 203 die Identifikationsnummer "AB378E44" zugeordnet. Ferner wird das Straßensegment 203 in den Landkartendaten als Vektor 204 abgebildet, welcher die Knotenpunkte 205 und 206 verbindet. Außerdem ist das Straßensegment 203 300 m lang.

Zusätzlich zeigt Tabelle 1 die dem Straßensegment 203 zugeordnete Geschwindigkeitsinformation, welche folgende Teilinformationen aufweist:
- Geschwindigkeitswerte, welche Geschwindigkeitsbegrenzungen beziehungsweise Höchstgeschwindigkeiten repräsentieren, die auf dem Straßensegment 203 gelten,
- Richtungsinformationen, welche für jeden der Geschwindigkeitswerte eine Fahrtrichtung angeben, für die der jeweilige Geschwindigkeitswert gilt,
- Geltungsbereiche, welche für jeden der Geschwindigkeitswerte einen Abschnitt des Straßensegments angeben, für den der jeweilige Geschwindigkeitswert gilt.

Demnach darf das Straßensegment 203 in Richtung des Knotenpunkts 206 und in Richtung des Knotenpunkts 205 jeweils auf seiner gesamten Länge (300 m) mit einer Höchstgeschwindigkeit von 50 km/h befahren werden.

Bei einem fünften Verfahrensschritt wird geprüft, ob die Identifikationsnummer des Ausgangsstraßensegments 203 bereits in der Referenzdatenbank gespeichert ist. Wenn dies der Fall ist, wird davon ausgegangen, dass das erfindungsgemäße Verfahren bereits in der Vergangenheit für das Ausgangsstraßensegment 203 durchlaufen wurde. In diesem Fall wird das Verfahren abgebrochen und ein anderes Straßensegment der ersten Mehrzahl von Straßensegmenten als Ausgangsstraßensegment ausgewählt. Wenn dagegen das Identifikationsmerkmal des Ausgangsstraßensegments 203 noch nicht in der Referenzdatenbank gespeichert ist, wird das Verfahren fortgeführt. Dadurch wird das Verfahren nur dann durchlaufen, wenn es für das vorliegende Ausgangsstraßensegment 203 noch nicht durchlaufen wurde.

Bei der vorliegenden Ausführungsform der Erfindung ist die Identifikationsnummer des Ausgangsstraßensegments 203 noch nicht in der Referenzdatenbank gespeichert, sodass das Verfahren fortgeführt wird.

Deshalb wird bei einem sechsten Verfahrensschritt mittels der Recheneinheit aus den Straßensegmenten der zweiten Mehrzahl von Straßensegmenten, die in dem Auswahlbereich 202 angeordnet sind, ein Straßensegment als Referenzstraßensegment ausgewählt. Das Referenzstraßensegment muss auf dem Ausgangsstraßensegment 203 angeordnet sein. Mit anderen Worten bedeckt das Referenzstraßensegment das Ausgangsstraßensegment 203 oder wenigstens einen Abschnitt des Ausgangsstraßensegments 203. Das heißt, Bedingung für das Auswählen eines Straßensegments als Referenzstraßensegment ist, dass zumindest ein Abschnitt des Straßensegments mit zumindest einem Abschnitt des Ausgangsstraßensegments 203 übereinstimmt.

Figur 3 zeigt die Stützpunkte der in dem Auswahlbereich 202 angeordneten Straßensegmente der zweiten Mehrzahl von Straßensegmenten, wobei die Stützpunkte als weiße Punkte mit schwarzem Rand ausgeführt sind. Ferner sind Vektoren, welche die Stützpunkte verbinden, in Form durchgängiger schwarzer Linien dargestellt. Jeder der Vektoren repräsentiert ein Straßensegment der zweiten Mehrzahl von Straßensegmenten. Wie Figur 3 verdeutlicht, gelten auch solche Straßensegmente als in dem Auswahlbereich 202 angeordnet, welche die Grenze des Auswahlbereichs 202 überqueren.

Zu bemerken ist, dass bei der hier betrachteten Ausführungsform der Erfindung die Geschwindigkeitsdaten derart ausgebildet sind, dass jedem Knotenpunkt und jedem Stützpunkt der Landkartendaten jeweils ein Stützpunkt der Geschwindigkeitsdaten zugeordnet ist, wobei die Koordinaten beider Punkte wenigstens annähernd übereinstimmen. Dadurch wird das Matching der Straßengeometrien vereinfacht. Zusätzlich weisen die Geschwindigkeitsdaten einige Stützpunkte auf, die keinem der Knotenpunkte und Stützpunkte der Landkartendaten zugeordnet sind. Abweichend davon können die Landkartendaten aber auch Knotenpunkte oder Stützpunkte aufweisen, denen kein Stützpunkt der Geschwindigkeitsdaten zugeordnet ist.

Zum Auswählen des Referenzstraßensegments werden ein Straßensegment oder mehrere Straßensegmente der zweiten Mehrzahl von Straßensegmenten, die in dem Auswahlbereich 202 angeordnet sind, jeweils mit dem Ausgangsstraßensegment 203 verglichen, bis ein Straßensegment der zweiten Mehrzahl von Straßensegmenten gefunden wird, das die oben genannte Bedingung erfüllt. Der Vergleich wird jeweils anhand der Knotenpunkte und Stützpunkte oder anhand der Vektoren der zu vergleichenden Straßensegmente vorgenommen. Die Reihenfolge, in welcher die Straßensegmente des Auswahlbereichs 202 mit dem Ausgangsstraßensegment 203 verglichen werden, kann beliebig sein oder einer bestimmten Vorgabe folgen.

Stimmt der Vektor eines für den Vergleich herangezogenen Straßensegments der zweiten Mehrzahl von Straßensegmenten mit dem Vektor 204 oder mit einem Teilabschnitt des Vektors 204 wenigstens annähernd überein, so wird angenommen, dass das betrachtete Straßensegment auf dem Ausgangsstraßensegment 203 angeordnet ist. In diesem Fall wird das für den Vergleich herangezogene Straßensegment als Referenzstraßensegment ausgewählt.

Wenn dagegen der Vektor eines für den Vergleich herangezogenen Straßensegments der zweiten Mehrzahl von Straßensegmenten nicht einmal annähernd mit dem Vektor 204 übereinstimmt, wird angenommen, dass das Straßensegment nicht auf dem Ausgangsstraßensegment 203 angeordnet ist. In diesem Fall wird das betrachtete Straßensegment nicht als Referenzstraßensegment ausgewählt, sondern verworfen. Anschließend wird ein anderes Straßensegment der zweiten Mehrzahl von Straßensegmenten mit dem Ausgangsstraßensegment 203 verglichen und gegebenenfalls als Referenzstraßensegment ausgewählt.

Im vorliegenden Fall wird neben anderen Straßensegmenten der zweiten Mehrzahl von Straßensegmenten auch das Straßensegment 303a mit dem Ausgangsstraßensegment 203 verglichen. Dabei wird festgestellt, dass der Stützpunkt 305 des Straßensegments 303a an derselben Position angeordnet ist wie der Knotenpunkt 205 des Straßensegments 203. Ferner wird festgestellt, dass der andere Stützpunkt 307 des Straßensegments 303a zwar nicht an derselben Position wie der andere Knotenpunkt 206 des Straßensegments 203 angeordnet ist, sich aber auf dem Vektor 204 befindet. Daraus wird geschlussfolgert, dass das Straßensegment 303a auf dem Ausgangsstraßensegment 203 angeordnet ist. Infolgedessen wird das Straßensegment 303a als Referenzstraßensegment ausgewählt.

Die folgende Tabelle 2 gibt einige in der Geschwindigkeitsdatenbank gespeicherte Attribute des Referenzstraßensegments 303a wieder:

**Tab. 2: In der Geschwindigkeitsdatenbank gespeicherte Attribute des Referenzstraßensegments 303a**

| | | |
|---|---|---|
| **Stützpunkte:** | 305, 307 | |
| **Vektor:** | 304a | |
| **Länge:** | 150 m | |
| **Geschwindigkeitsinformation:** | **Richtungsinformationen** | **Geschwindigkeitswerte** |
| | Richtung Knotenpkt. 307 | 50 km/h |
| | Richtung Knotenpkt. 305 | 50 km/h |

Gemäß Tabelle 2 wird das Referenzstraßensegment 303a in den Geschwindigkeitsdaten als Vektor 304a abgebildet, welcher die Knotenpunkte 305 und 307 verbindet. Ferner ist das Straßensegment 303a 150 m lang. Dem Referenzstraßensegment 303a ist eine Geschwindigkeitsinformation zugeordnet, gemäß der das Referenzstraßensegment 303a in Richtung des Knotenpunkts 307 und in Richtung des Knotenpunkts 305 jeweils mit einer Höchstgeschwindigkeit von 50 km/h befahren werden darf.

Bei einem siebenten Verfahrensschritt wird mittels der Recheneinheit geprüft, ob das Referenzstraßensegment 303a das Ausgangsstraßensegment 203 vollständig bedeckt. Das ist dann der Fall, wenn das Ausgangsstraßensegment 203 keinen Abschnitt aufweist, auf dem das Referenzstraßensegment 303a nicht angeordnet ist.

Daraus, dass der Stützpunkt 305 des Straßensegments 303a an dem Knotenpunkt 205 des Ausgangsstraßensegments 203 angeordnet ist, während der andere Stützpunkt 307 des Straßensegments 303a nicht an dem anderen Knotenpunkt 206 des Straßensegments 203 angeordnet ist, wird geschlussfolgert, dass das Straßensegment 303a das Straßensegment 203 nicht vollständig bedeckt, sondern nur einen Abschnitt des Straßensegments 203 bildet. Deshalb wird bei einem achten Verfahrensschritt mittels der Recheneinheit aus den Straßensegmenten der zweiten Mehrzahl von Straßensegmenten, die in dem Auswahlbereich 202 angeordnet sind, ein weiteres Straßensegment als Referenzstraßensegment ausgewählt.

Würde dagegen das Straßensegment 303a das Ausgangsstraßensegment 203 vollständig bedecken, würde das erfindungsgemäße Verfahren mit dem Speichern der Identifikationsnummer des Ausgangsstraßensegments 203 und der Geschwindigkeitsinformation des Referenzstraßensegments 303a in der Referenzdatenbank fortgesetzt.

Das im vorliegenden Fall auszuwählende weitere Referenzstraßensegment ist dadurch gekennzeichnet, dass es auf dem Ausgangsstraßensegment 203 angeordnet ist. Der für das Auswählen des weiteren Referenzstraßensegments erforderliche Vergleich eines Straßensegments oder mehrerer Straßensegmente der zweiten Mehrzahl von Straßensegmenten, die sich in dem Auswahlbereich 202 befinden, jeweils mit dem Ausgangsstraßensegment 203 wird auf die gleiche Weise vorgenommen wie beim Auswählen des Referenzstraßensegments 303a (siehe oben).

Im vorliegenden Fall wird neben anderen Straßensegmenten der zweiten Mehrzahl von Straßensegmenten auch das Straßensegment 303b mit dem Ausgangsstraßensegment 203 verglichen. Dabei wird festgestellt, dass der Stützpunkt 307 des Straßensegments 303b auf dem Vektor 204 angeordnet ist. Ferner wird festgestellt, dass der andere Stützpunkt 306 des Straßensegments 303b an dem Knotenpunkt 206 des Ausgangsstraßensegments 203 angeordnet ist. Daraus wird geschlussfolgert, dass das Straßensegment 303b auf dem Straßensegment 203 angeordnet ist. Infolgedessen wird das Straßensegment 303b als weiteres Referenzstraßensegment ausgewählt.

Die folgende Tabelle 3 gibt einige in der Geschwindigkeitsdatenbank gespeicherte Attribute des Referenzstraßensegments 303b wieder:

**Tab. 3: In der Geschwindigkeitsdatenbank gespeicherte Attribute des Referenzstraßensegments 303b**

| | | |
|---|---|---|
| **Stützpunkte:** | 307, 306 | |
| **Vektor:** | 304b | |
| **Länge:** | 150 m | |
| **Geschwindigkeitsinformation:** | **Richtungsinformationen** | **Geschwindigkeitswerte** |
| | Richtung Knotenpkt. 306 | 50 km/h |
| | Richtung Knotenpkt. 307 | 30 km/h |

Gemäß Tabelle 3 wird das Referenzstraßensegment 303b in den Geschwindigkeitsdaten als Vektor 304b abgebildet, welcher die Knotenpunkte 307 und 306 verbindet. Das Referenzstraßensegment 303b ist 150 m lang. Dem Referenzstraßensegment 303b ist außerdem eine Geschwindigkeitsinformation zugeordnet, gemäß der das Referenzstraßensegment 303b in Richtung des Knotenpunkts 306 mit einer Höchstgeschwindigkeit von 50 km/h und in Richtung des Knotenpunkts 307 mit einer Höchstgeschwindigkeit von nur 30 km/h befahren werden darf.

Bei einem neunten Verfahrensschritt wird mittels der Recheneinheit geprüft, ob die bisher ausgewählten Referenzstraßensegmente 303a und 303b das Ausgangsstraßensegment 203 vollständig bedecken. Das ist dann der Fall, wenn das Ausgangsstraßensegment 203 keinen Abschnitt aufweist, auf dem nicht das Referenzstraßensegment 303a oder das Referenzstraßensegment 303b angeordnet ist.

Daraus, dass der Stützpunkt 305 des Straßensegments 303a an dem Knotenpunkt 205 angeordnet ist, der Stützpunkt 306 des Straßensegments 303b an dem Knotenpunkt 206 angeordnet ist und die Straßensegmente 303a und 303b denselben Stützpunkt 307 aufweisen, ergibt sich, dass die Straßensegmente 303a und 303b das Ausgangsstraßensegment 203 vollständig bedecken. Mit anderen Worten stimmt ein aus den Straßensegmenten 303a und 303b zusammengesetztes fiktives Straßensegment mit dem Ausgangsstraßensegment 203 überein.

Daraus folgt, dass mit den Referenzstraßensegmenten 303a und 303b alle Straßensegmente der zweiten Mehrzahl von Straßensegmenten ausgewählt wurden, die auf dem Ausgangsstraßensegment 203 angeordnet sind. Deshalb können dem Ausgangsstraßensegment 203 keine weiteren Referenzstraßensegmente zugeordnet werden. Stattdessen wird das Verfahren mit dem Speichern der Identifikationsnummer des Ausgangsstraßensegments 203 und der Geschwindigkeitsinformationen der Straßensegmente 303a und 303b in der Referenzdatenbank fortgesetzt.

Würden dagegen die bisher aus der zweiten Mehrzahl von Straßensegmenten ausgewählten Straßensegmente 303a und 303b das Ausgangsstraßensegment 203 nicht vollständig bedecken, würde ein weiteres Referenzstraßensegment ausgewählt. Das Auswählen weiterer Referenzstraßensegmente würde solange fortgesetzt, bis die Referenzstraßensegmente das Ausgangsstraßensegment 203 vollständig bedecken würden.

Da die Referenzstraßensegmente 303a und 303b das Ausgangsstraßensegment 203 vollständig bedecken, werden bei einem zehnten Verfahrensschritt die Identifikationsnummer des Ausgangsstraßensegments 203 und die Geschwindigkeitsinformationen der Straßensegmente 303a und 303b in der Referenzdatenbank gespeichert, sodass die Identifikationsnummer mit den Geschwindigkeitsinformationen verknüpft wird. Dazu werden die Identifikationsnummer und die Geschwindigkeitsinformationen in einem gemeinsamen Datensatz abgelegt, wobei die Geschwindigkeitsinformationen unter Verwendung der Recheneinheit zu einer Geschwindigkeitsinformation zusammengefasst werden, die in Tabelle 4 gezeigt ist.

Die folgende Tabelle 4 gibt einige in der Referenzdatenbank gespeicherte Attribute des Ausgangsstraßensegments 203 wieder:

**Tab. 4: In der Referenzdatenbank gespeicherte Attribute des Ausgangsstraßensegments 203**

| | | | |
|---|---|---|---|
| **Identifikationsnr.:** | AB378E44 | | |
| **Geschwindigkeitsinformation:** | **Richtungsinformationen** | **Geltungsbereiche** | **Geschwindigkeitswerte** |
| | Richtung Knotenpkt. 206 | gesamte Länge | 50 km/h |
| | Richtung Knotenpkt. 205 | östliche 150 m | 30 km/h |
| | Richtung Knotenpkt. 205 | westliche 150 m | 50 km/h |

Gemäß Tabelle 4 ist dem Ausgangsstraßensegment 203, welches die Identifikationsnummer AB378E44 aufweist, die folgende Geschwindigkeitsinformation zugeordnet: In Richtung des Knotenpunkts 206 darf das Ausgangsstraßensegment 203 auf seiner gesamten Länge mit einer Höchstgeschwindigkeit von 50 km/h befahren werden. In Richtung des Knotenpunkts 205 darf das Ausgangsstraßensegment 203 auf seinen östlichen 150 m mit einer Höchstgeschwindigkeit von nur 30 km/h und auf seinen westlichen 150 m mit einer Höchstgeschwindigkeit von 50 km/h befahren werden.
Mit dem Speichern der Identifikationsnummer des Ausgangsstraßensegments 203 und der Geschwindigkeitsinformationen der Straßensegmente 303a und 303b in der Referenzdatenbank als eine zusammengefasste Geschwindigkeitsinformation wurde das erfindungsgemäße Verfahren einmal komplett durchlaufen.

In der Folge werden weitere Ausgangsstraßensegmente aus denjenigen Straßensegmenten der ersten Mehrzahl von Straßensegmenten, die in dem Auswahlbereich angeordnet sind, ausgewählt. Dabei wird in der gleichen Weise vorgegangen wie beim Auswählen des Ausgangsstraßensegments 203 (siehe oben). Damit wird solange fortgefahren, bis alle Straßensegmente der ersten Mehrzahl von Straßensegmenten, die in dem Auswahlbereich angeordnet sind, als Ausgangsstraßensegmente ausgewählt worden sind.

Die Reihenfolge, in der die Ausgangsstraßensegmente aus der ersten Mehrzahl von Straßensegmenten ausgewählt werden, ist im vorliegenden Fall beliebig. Gemäß einer vorteilhaften Ausführungsform der Erfindung werden zunächst die am nahesten an der Position 201 des Fahrzeugs angeordneten Straßensegmente als Ausgangsstraßensegmente ausgewählt, bevor die weiter entfernt von der Position 201 angeordneten Straßensegmente als Ausgangsstraßensegmente ausgewählt werden.

Für jedes der Ausgangsstraßensegmente werden ein Referenzstraßensegment oder mehrere Referenzstraßensegmente aus der zweiten Mehrzahl von Straßensegmenten ausgewählt. Dabei wird in der gleichen Weise vorgegangen wie beim Auswählen der Referenzstraßensegmente 303a und 303b (siehe oben).

Des Weiteren werden für jedes der Ausgangsstraßensegmente die Identifikationsnummer des jeweiligen Ausgangsstraßensegments und die Geschwindigkeitsinformationen der jeweils zugeordneten Referenzstraßensegmente in der Referenzdatenbank gespeichert, sodass das Identifikationsmerkmal mit den Geschwindigkeitsinformationen verknüpft wird. Dabei wird in der gleichen Weise vorgegangen wie bei dem Ausgangsstraßensegment 203 (siehe oben).

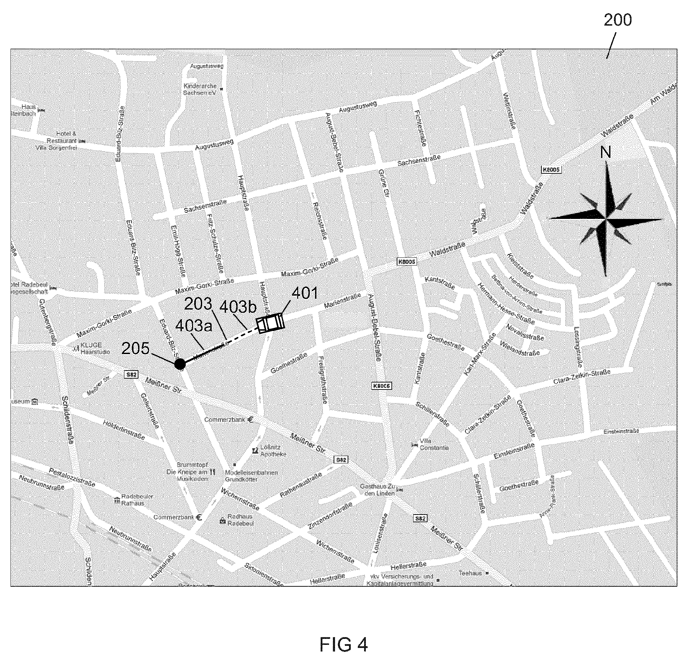

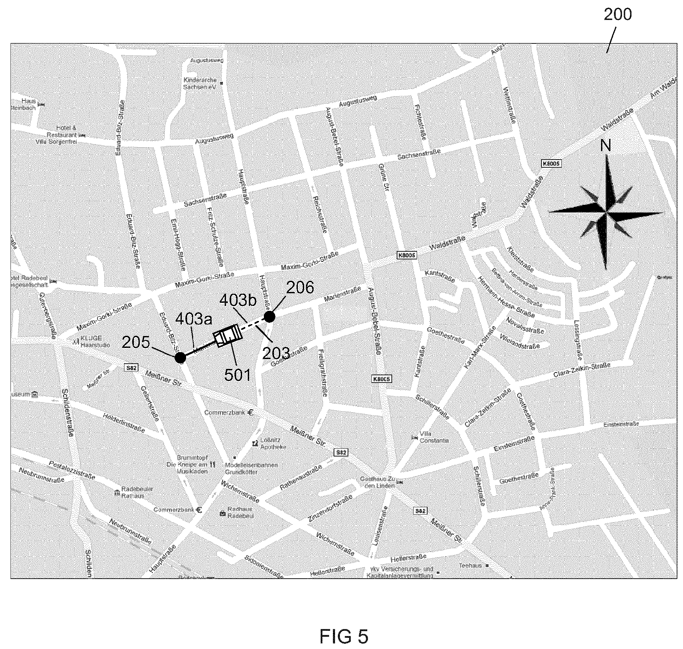

Im Folgenden wird bezugnehmend auf die **Figuren 4** **und** **5** ein erfindungsgemäßes Verfahren vorgestellt, welches zum Ausgeben eines Geschwindigkeitswerts an einen Benutzer einer Navigationseinrichtung dient.

Die Figuren 4 und 5 zeigen jeweils den Landkartenausschnitt 200 und eine Position 401, 501 des Fahrzeugs, welches mit der Navigationseinrichtung aus Figur 1 ausgestattet ist. In der Referenzdatenbank der Navigationseinrichtung sind mehrere Identifikationsmerkmale und mehrere Geschwindigkeitsinformationen gespeichert, sodass jedes der gespeicherten Identifikationsmerkmale mit einer der gespeicherten Geschwindigkeitsinformationen verknüpft ist. Unter anderem ist in der Referenzdatenbank der Datensatz gespeichert, welcher die in Tabelle 4 gezeigten Attribute des Straßensegments 203 enthält.

Figur 4 zeigt die Position 401 des Fahrzeugs zu einem Zeitpunkt, an dem sich das Fahrzeug auf dem Straßensegment 203 befindet. Das Fahrzeug fährt am Knotenpunkt 206 (nicht gezeigt) in Richtung des Knotenpunkts 205. Das heißt, das Fahrzeug befährt das östliche Ende des Straßensegments 203 in westlicher Richtung.

Zu bemerken ist, dass das Straßensegment 203 in einen westlichen Abschnitt 403a, der durch eine durchgehende Linie gekennzeichnet ist, und einen östlichen Abschnitt 403b, der durch eine unterbrochene Linie gekennzeichnet ist, aufgeteilt ist. Der westliche Abschnitt 403a stimmt mit dem Referenzstraßensegment 303a (siehe Figur 3) überein, während der östliche Abschnitt 403b mit dem Referenzstraßensegment 303b (siehe Figur 3) übereinstimmt. Daher haben beide Abschnitte, 403a und 403b, jeweils die Länge des entsprechenden Straßensegments, 303a beziehungsweise 303b, also 150 m. Ferner repräsentieren beide Abschnitte, 403a und 403b, die Geltungsbereiche unterschiedlicher Geschwindigkeitswerte.

Bei einem ersten Verfahrensschritt wird mittels der Positionsbestimmungseinheit die geografische Position 401 des Fahrzeugs beziehungsweise der Navigationseinrichtung bestimmt und zur Weiterverarbeitung an die Recheneinheit übertragen.

Dann wird bei einem zweiten Verfahrensschritt mittels der Recheneinheit unter Berücksichtigung der Position 401 und unter Verwendung der Landkartendaten die Identifikationsnummer des Straßensegments 203 bestimmt, auf dem sich das Fahrzeug befindet. Die Identifikationsnummer lautet AB378E44.

Bei einem dritten Verfahrensschritt wird die mit der Identifikationsnummer verknüpfte Geschwindigkeitsinformation (siehe Tabelle 4) aus der Referenzdatenbank ausgelesen und in die Recheneinheit übertragen.

Danach wird bei einem vierten Verfahrensschritt ein Geschwindigkeitswert aus der Geschwindigkeitsinformation gewonnen.

Da die vorliegende Geschwindigkeitsinformation verschiedene Geschwindigkeitswerte enthält, wird der zu gewinnende Geschwindigkeitswert aus den verschiedenen Geschwindigkeitswerten ausgewählt. Dazu wird zunächst mittels der Recheneinheit unter Berücksichtigung der Position 401 und unter Verwendung der Landkartendaten derjenige Abschnitt des Straßensegments 203 ermittelt, auf dem sich das Fahrzeug befindet. Dabei wird festgestellt, dass sich das Fahrzeug auf dem östlichen Abschnitt 403b befindet. Des Weiteren wird unter Berücksichtigung der aktuellen Position 401 und einer älteren Position des Fahrzeugs und unter Verwendung der Landkartendaten die Fahrtrichtung des Fahrzeugs ermittelt. Auf diese Weise wird festgestellt, dass das Fahrzeug in Richtung des Knotenpunkts 205 fährt.

Auf der Basis dieser Informationen wird anschließend aus den Geschwindigkeitswerten der Geschwindigkeitsinformation derjenige Geschwindigkeitswert ausgewählt und an die Recheneinheit übertragen, welcher den Attributen "Richtung Knotenpkt. 205" und "östliche 150 m" zugeordnet ist. Dabei handelt es sich gemäß Tabelle 4 um den Geschwindigkeitswert "30 km/h".

Würde, abweichend von dem vorliegenden Ausführungsbeispiel, die Geschwindigkeitsinformation nur einen einzigen Geschwindigkeitswert aufweisen, würde dieser Geschwindigkeitswert an die Recheneinheit übertragen.

Anschließend wird bei einem fünften Verfahrensschritt der ausgewählte Geschwindigkeitswert mittels einer Ausgabeeinheit in Form der Ausgabe- und Bedieneinheit der Navigationseinrichtung ausgegeben. Dazu wird der Geschwindigkeitswert auf dem Berührungsbildschirm in Form eines Verkehrszeichens dargestellt. Parallel dazu wird der Geschwindigkeitswert über die Sprachausgabeeinrichtung als akustisches Signal ausgegeben, wenn die tatsächliche Geschwindigkeit des Fahrzeugs größer als der Geschwindigkeitswert ist.

Figur 5 zeigt das Fahrzeug zu einem Zeitpunkt, an dem sich das Fahrzeug auf dem westlichen Abschnitt 403a des Straßensegments 203 befindet, wobei die Position 501 des Fahrzeugs an der Grenze zwischen dem westlichen Abschnitt 403a und dem östlichen Abschnitt 403b des Straßensegments 203 angeordnet ist und das Fahrzeug in Richtung des Knotenpunkts 205 fä h rt.

Bei einem ersten Verfahrensschritt wird mittels der Positionsbestimmungseinheit der Navigationseinrichtung die geografische Position 501 des Fahrzeugs beziehungsweise der Navigationseinrichtung bestimmt und zur Weiterverarbeitung an die Recheneinheit übertragen.

Dann wird bei einem zweiten Verfahrensschritt mittels der Recheneinheit unter Berücksichtigung der Position 501 und unter Verwendung der Landkartendaten die Identifikationsnummer des Straßensegments 203 bestimmt, auf dem sich das Fahrzeug befindet. Die Identifikationsnummer lautet AB378E44.

Bei einem dritten Verfahrensschritt wird die mit der Identifikationsnummer verknüpfte Geschwindigkeitsinformation (siehe Tabelle 4) aus der Referenzdatenbank ausgelesen und in die Recheneinheit übertragen.

Danach wird bei einem vierten Verfahrensschritt ein Geschwindigkeitswert aus der Geschwindigkeitsinformation gewonnen.

Da im vorliegenden Fall die Geschwindigkeitsinformation verschiedene Geschwindigkeitswerte aufweist, wird der Geschwindigkeitswert aus den verschiedenen Geschwindigkeitswerten ausgewählt. Dazu wird zunächst mittels der Recheneinheit unter Berücksichtigung der Position 501 und unter Verwendung der Landkartendaten festgestellt, dass sich das Fahrzeug auf dem westlichen Abschnitt 403a des Straßensegments 203 befindet. Des Weiteren wird unter Berücksichtigung der aktuellen Position 501 und einer älteren Position und unter Verwendung der Landkartendaten festgestellt, dass das Fahrzeug in Richtung des Knotenpunkts 205 fährt.

Auf der Basis dieser Informationen wird anschließend mittels der Recheneinheit aus den verschiedenen Geschwindigkeitswerten der Geschwindigkeitsinformation derjenige Geschwindigkeitswert ausgewählt und an die Recheneinheit übertragen, welcher den Attributen "Richtung Knotenpkt. 205" und "westliche 150 m" zugeordnet ist. Dabei handelt es sich gemäß Tabelle 4 um den Geschwindigkeitswert "50 km/h".

Anschließend wird bei einem fünften Verfahrensschritt der ausgewählte Geschwindigkeitswert mittels der Ausgabe- und Bedieneinheit ausgegeben. Dazu wird der Geschwindigkeitswert auf dem Berührungsbildschirm in Form eines Verkehrszeichens dargestellt. Parallel dazu wird der Geschwindigkeitswert über die Sprachausgabeeinrichtung als akustisches Signal ausgegeben, wenn die tatsächliche Geschwindigkeit des Fahrzeugs größer als der Geschwindigkeitswert ist.

## Patentansprüche

1. Verfahren zum Betreiben einer Navigationseinrichtung mit
einer Landkartendatenbank, welche Landkartendaten aufweist, die einer ersten Mehrzahl von Straßensegmenten zugeordnet sind, in welche die Straßen eines Gebiets gegliedert sind, wobei die Landkartendaten Identifikationsmerkmale aufweisen, sodass jedem der Straßensegmente der ersten Mehrzahl von Straßensegmenten eines der Identifikationsmerkmale zugeordnet ist,
einer Geschwindigkeitsdatenbank, welche Geschwindigkeitsdaten aufweist, die einer zweiten Mehrzahl von Straßensegmenten zugeordnet sind, in welche die Straßen des Gebiets gegliedert sind, wobei die Geschwindigkeitsdaten Geschwindigkeitsinformationen aufweisen, sodass jedem der Straßensegmente der zweiten Mehrzahl von Straßensegmenten eine der Geschwindigkeitsinformationen zugeordnet ist, und
einer Referenzdatenbank,
wobei das Verfahren folgende Schritte aufweist:
Bestimmen einer Position (201) der Navigationseinrichtung,
Definieren eines in dem Gebiet angeordneten Auswahlbereichs (202) unter Berücksichtigung der Position (201),
Auswählen eines Ausgangsstraßensegments (203) aus denjenigen Straßensegmenten der ersten Mehrzahl von Straßensegmenten, die in dem Auswahlbereich (202) angeordnet sind,
Auswählen eines auf dem Ausgangsstraßensegment (203) angeordneten Referenzstraßensegments (303a, 303b) aus der zweiten Mehrzahl von Straßensegmenten und
Speichern des Identifikationsmerkmals des Ausgangsstraßensegments (203) und der Geschwindigkeitsinformation des Referenzstraßensegments (303a, 303b) in der Referenzdatenbank, sodass das Identifikationsmerkmal des Ausgangsstraßensegments (203) mit der Geschwindigkeitsinformation des Referenzstraßensegments (303a, 303b) verknüpft wird.

2. Verfahren gemäß Anspruch 1,
bei dem alle Straßensegmente der zweiten Mehrzahl von Straßensegmenten, die auf dem Ausgangsstraßensegment (203) angeordnet sind, als Referenzstraßensegmente (303a, 303b) ausgewählt werden und
das Identifikationsmerkmal des Ausgangsstraßensegments (203) und die Geschwindigkeitsinformationen der Referenzstraßensegmente (303a, 303b) in der Referenzdatenbank gespeichert werden, sodass das Identifikationsmerkmal des Ausgangsstraßensegments (203) mit den Geschwindigkeitsinformationen der Referenzstraßensegmente (303a, 303b) verknüpft wird.

3. Verfahren gemäß Anspruch 2,
bei dem nach dem Auswählen jedes Referenzstraßensegments (303a, 303b) geprüft wird, ob die bisher ausgewählten Referenzstraßensegmente (303a, 303b) das Ausgangsstraßensegment (203) vollständig bedecken, und ein weiteres Referenzstraßensegment (303b) ausgewählt wird, wenn die bisher ausgewählten Referenzstraßensegmente (303a, 303b) das Ausgangsstraßensegment (203) nicht vollständig bedecken.

4. Verfahren gemäß einem der vorhergehenden Ansprüche,
bei dem jedes Straßensegment der ersten Mehrzahl von Straßensegmenten, das in dem Auswahlbereich (202) angeordnet ist, als Ausgangsstraßensegment (203) ausgewählt wird,
für jedes der Ausgangsstraßensegmente (203) alle Straßensegmente der zweiten Mehrzahl von Straßensegmenten, die auf dem jeweiligen Ausgangsstraßensegment angeordnet sind, als Referenzstraßensegmente (303a, 303b) ausgewählt werden, und
für jedes der Ausgangsstraßensegmente (203) das Identifikationsmerkmal des jeweiligen Ausgangsstraßensegments (203) und die Geschwindigkeitsinformationen der jeweiligen Referenzstraßensegmente (303a, 303b) in der Referenzdatenbank gespeichert werden, sodass das Identifikationsmerkmal des jeweiligen Ausgangsstraßensegments (203) mit den Geschwindigkeitsinformationen der jeweiligen Referenzstraßensegmente (303a, 303b) verknüpft wird.

5. Verfahren gemäß einem der vorhergehenden Ansprüche,
bei dem der Auswahlbereich (202) derart ausgebildet ist, dass die Position (201) in dem Auswahlbereich (202) angeordnet ist und der Auswahlbereich (202) kleiner als das Gebiet ist.

6. Verfahren gemäß Anspruch 5,
bei dem der Auswahlbereich (202) derart ausgebildet ist, dass der Auswahlbereich (202) die Form eines Kreises aufweist, wobei die Position (201) im Zentrum des Kreises angeordnet ist.

7. Verfahren gemäß Anspruch 5,
bei dem der Auswahlbereich (202) derart ausgebildet ist, dass der Auswahlbereich (202) eine von der Navigationseinrichtung berechnete Route umgibt.

8. Verfahren gemäß Anspruch 1,
bei dem die Landkartendatenbank ein erstes Zeitdatum aufweist und die Geschwindigkeitsdatenbank ein zweites Zeitdatum aufweist, wobei das erste Zeitdatum mit dem zweiten Zeitdatum verglichen wird und die Schritte ausgeführt werden, wenn das erste Zeitdatum älter als das zweite Zeitdatum ist.

9. Verfahren gemäß Anspruch 1,
bei dem geprüft wird, ob das Identifikationsmerkmal des Ausgangsstraßensegments (203) in der Referenzdatenbank gespeichert ist, wobei das Referenzstraßensegment (303a, 303b) ausgewählt wird und das Identifikationsmerkmals des Ausgangsstraßensegments (203) und die Geschwindigkeitsinformation des Referenzstraßensegments (303a, 303b) in der Referenzdatenbank gespeichert werden, wenn das Identifikationsmerkmal des Ausgangsstraßensegments (203) nicht in der Referenzdatenbank gespeichert ist,

10. Navigationseinrichtung, welche aufweist
eine Positionsbestimmungseinheit, welche zum Bestimmen einer Position (201) der Navigationseinrichtung eingerichtet ist,
eine Landkartendatenbank mit Landkartendaten, die eine erste Mehrzahl von Straßensegmenten repräsentieren, in welche die Straßen eines Gebiets gegliedert sind, wobei die Landkartendaten Identifikationsmerkmale aufweisen, sodass jedem der Straßensegmente der ersten Mehrzahl von Straßensegmenten eines der Identifikationsmerkmale zugeordnet ist,
eine Geschwindigkeitsdatenbank mit Geschwindigkeitsdaten, die eine zweite Mehrzahl von Straßensegmenten repräsentieren, in welche die Straßen des Gebiets gegliedert sind, wobei die Geschwindigkeitsdaten Geschwindigkeitsinformationen aufweisen, sodass jedem der Straßensegmente der zweiten Mehrzahl von Straßensegmenten eine der Geschwindigkeitsinformationen zugeordnet ist,
eine Recheneinheit, welche zum Definieren eines in dem Gebiet angeordneten Auswahlbereichs (202) unter Berücksichtigung der Position (201), zum Auswählen eines Ausgangsstraßensegments (203) aus denjenigen Straßensegmenten der ersten Mehrzahl von Straßensegmenten, die in dem Auswahlbereich angeordnet sind, und zum Auswählen eines auf dem Ausgangsstraßensegment (203) angeordneten Referenzstraßensegments (303a, 303b) aus der zweiten Mehrzahl von Straßensegmenten eingerichtet ist, und
eine Referenzdatenbank, wobei die Recheneinheit zum Speichern des Identifikationsmerkmals des Ausgangsstraßensegments (203) und der Geschwindigkeitsinformation des Referenzstraßensegments (303a, 303b) in der Referenzdatenbank eingerichtet ist, sodass das Identifikationsmerkmal des Ausgangsstraßensegments (203) mit der Geschwindigkeitsinformation des Referenzstraßensegments (303a, 303b) verknüpft wird.

## Claims

1. Method for operating a navigation device comprising
a map data base which comprises map data assigned to a first plurality of road segments in which the roads of a region are divided wherein the map data comprise identification attributes so that to each of the road segments of the first plurality of road segments one of the identification attributes is assigned,
a speed data base which comprises speed data assigned to a second plurality of road segments in which the roads of the region are divided wherein the speed data comprise speed information items so that to each of the road segments of the second plurality of road segments one of the speed information items is assigned, and
a reference data base,
wherein the method comprises the following steps:
determining a position (201) of the navigation device,
defining a selection area (202) disposed in the region considering the position (201),
selecting an initial road segment (203) from those road segments of the first plurality of road segments which are disposed in the selection area (202),
selecting a reference road segment (303a, 303b) disposed on the initial road segment (203) from the second plurality of road segments, and
storing the identification attribute of the initial road segment (203) and the speed information item of the reference road segment (303a, 303b) in the reference data base so that the identification attribute of the initial road segment (203) is linked with the speed information item of the reference road segment (303a, 303b).

2. Method according to claim 1
wherein all road segments of the second plurality of road segments which are disposed on the initial road segment (203) are selected as reference road segments (303a, 303b) and
the identification attribute of the initial road segment (203) and the speed information items of the reference road segments (303a, 303b) are stored in the reference data base so that the identification attribute of the initial road segment (203) is linked with the speed information items of the reference road segments (303a, 303b).

3. Method according to claim 2
wherein after selecting each reference road segment (303a, 303b) it is checked if the so far selected reference road segments (303a, 303b) cover the initial road segment (203) completely and another reference road segment (303b) is selected if the so far selected reference road segments (303a, 303b) do not cover the initial road segment (203) completely.

4. Method according to one of the preceding claims
wherein each road segment of the first plurality of road segments which is disposed in the selection area (202) is selected as initial road segment (203),
for each of the initial road segments (203) all road segments of the second plurality of road segments disposed on the respective initial road segment are selected as reference road segments (303a, 303b), and
for each of the initial road segments (203) the identification attribute of the respective initial road segment (203) and the speed information items of the respective reference road segments (303a, 303b) are stored in the reference data base so that the identification attribute of the respective initial road segment (203) is linked with the speed information items of the respective reference road segments (303a, 303b).

5. Method according to one of the preceding claims
wherein the selection area (202) is formed in such a way that the position (201) is disposed in the selection area (202) and the selection area (202) is smaller than the region.

6. Method according to claim 5
wherein the selection area (202) is formed in such a way that the selection area (202) comprises the shape of a circle wherein the position (201) is disposed in the centre of the circle.

7. Method according to claim 5
wherein the selection area (202) is formed in such a way that the selection area (202) encloses a route calculated by the navigation device.

8. Method according to claim 1
wherein the map data base comprises a first time date and the speed data base comprises a second time date wherein the first time date is compared with the second time date and the steps are performed if the first time date is older than the second time date.

9. Method according to claim 1
wherein it is checked if the identification attribute of the initial road segment (203) is stored in the reference data base wherein the reference road segment (303a, 303b) is selected and the identification attribute of the initial road segment (203) and the speed information item of the reference road segment (303a, 303b) are stored in the reference data base if the identification attribute of the initial road segment (203) is not stored in the reference data base.

10. Navigation device which comprises
a positioning unit which is arranged for determining a position (201) of the navigation device,
a map data base comprising map data which represent a first plurality of road segments in which the roads of a region are divided wherein the map data comprise identification attributes so that to each of the road segments of the first plurality of road segments one of the identification attributes is assigned,
a speed data base which comprises speed data which represent a second plurality of road segments in which the roads of the region are divided wherein the speed data comprise speed information items so that to each of the road segments of the second plurality of road segments one of the speed information items is assigned,
a processing unit which is arranged for defining a selection area (202) disposed in the region considering the position (201), selecting an initial road segment (203) from those road segments of the first plurality of road segments which are disposed in the selection area, and selecting a reference road segment (303a, 303b) disposed on the initial road segment (203) from the second plurality of road segments, and
a reference data base,
wherein the processing unit is arranged for storing the identification attribute of the initial road segment (203) and the speed information item of the reference road segment (303a, 303b) in the reference data base so that the identification attribute of the initial road segment (203) is linked with the speed information item of the reference road segment (303a, 303b).

## Revendications

1. Procédé pour l'exploitation d'un dispositif de navigation avec
une base de données de cartes contenant des données de cartes qui sont associées à une première pluralité de segments de routes où sont regroupées les routes d'une région, lesdites données de cartes présentant des caractéristiques d'identification de sorte que l'une des caractéristiques d'identification est associée à chacun des segments de routes de la première pluralité de segments de routes,
une base de données de vitesse contenant des données de vitesse qui sont associées à une deuxième pluralité de segments de routes où sont regroupées les routes de la région, lesdites données de vitesse présentant des informations de vitesse de sorte que l'une des informations de vitesse est associée à chacun des segments de routes de la deuxième pluralité de segments de routes, et
une base de données de référence,
**caractérisé en ce que** le procédé est constitué des étapes suivantes :
détermination de la position (201) du dispositif de navigation ;
définition d'une zone de sélection (202) située dans la région en tenant compte de la position (201) ;
sélection d'un segment de routes de départ (203) parmi les segments de routes de la première pluralité de segments de routes qui se situent dans la zone de sélection (202) ;
sélection d'un segment de routes de référence (303a, 303b) situé dans le segment de routes de départ (203) parmi la deuxième pluralité de segments de route et
enregistrement de la caractéristique d'identification du segment de routes de départ (203) et de l'information de vitesse du segment de routes de référence (303a, 303b) dans la base de données de référence de sorte que la caractéristique d'identification du segment de routes de départ (203) est mise en lien avec l'information de vitesse du segment de routes de référence (303a, 303b).

2. Procédé selon la revendication 1,
**caractérisé en ce que** tous les segments de routes de la deuxième pluralité de segments de routes qui sont agencés sur la segment des routes de départ (203), sont sélectionnés comme segments de routes de référence (303a, 303b) et que
la caractéristique d'identification du segment de routes de départ (203) et les informations de vitesse des segments de routes de référence (303a, 303b) sont enregistrées dans la base de données de référence de sorte que la caractéristique d'identification du segment de routes de départ (203) est mise en lien avec les informations de vitesse des segments de routes de référence (303a, 303b).

3. Procédé selon la revendication 2,
**caractérisé en ce que**, après la sélection de chacun des segments de routes de référence (303a, 303b), il est vérifié si les segments de routes de référence (303a, 303b) sélectionnés jusqu'ici couvrent complètement le segment de routes de départ (203), et il est sélectionné encore un autre segment de routes de référence (303b) si les segments de routes de référence (303a, 303b) sélectionnés jusqu'ici ne couvrent pas complètement le segment de routes de départ (203).

4. Procédé selon l'une des revendications précédentes,
**caractérisé en ce que** chacun des segments de routes de la première pluralité de segments de routes qui se situe dans la zone de sélection (202), est sélectionné comme segment de routes de départ (203),
**caractérisé en ce que**, pour chacun des segments de routes de départ (203), tous les segments de routes de la deuxième pluralité de segments de routes qui se situent sur le segment de routes de départ respectif, sont sélectionnés comme segments de routes de référence (303a, 303b) et
que, pour chacun des segments de routes de départ (203), la caractéristique d'identification du segment de routes de départ (203) respectif et l'information de vitesse des segments de routes de référence (303a, 303b) respectifs sont enregistrées dans la base de données de référence de sorte que la caractéristique d'identification du segment de routes de départ (203) respectif est mise en lien avec les informations de vitesse des segments de routes de référence (303a, 303b) respectifs.

5. Procédé selon l'une des revendications précédentes,
**caractérisé en ce que** la zone de sélection (202) est formée de de sorte que la position (201) se situe dans la zone de sélection (202) et que la zone de sélection (202) est plus petite que la région.

6. Procédé selon la revendication 5,
**caractérisé en ce que** la zone de sélection (202) est formée de sorte que la zone de sélection (202) a la forme d'un cercle, la position (201) étant agencée au centre dudit cercle.

7. Procédé selon la revendication 5,
**caractérisé en ce que** la zone de sélection (202) est formée de sorte que la zone de sélection (202) entoure un itinéraire calculé par le dispositif de navigation.

8. Procédé selon la revendication 1,
**caractérisé en ce que** la base de données de cartes présente une première date temporelle et que la base de données de vitesse présente une deuxième date temporelle, la première date temporelle étant comparée avec la deuxième date temporelle et les étapes étant réalisées lorsque la première date temporelle est antérieure à la deuxième date temporelle.

9. Procédé selon la revendication 1,
**caractérisé en ce qu'**il est vérifié si la caractéristique d'identification du segment de routes de départ (203) est enregistrée dans la base de données de référence, le segment de routes de référence (303a, 303b) étant sélectionné et la caractéristique d'identification du segment de routes de départ (203) et l'information de vitesse du segment de routes de référence (303a, 303b) étant enregistrées dans la base de données de référence si la caractéristique d'identification du segment de routes de départ (203) n'est pas enregistré dans la base de données de référence.

10. Dispositif de navigation comprenant
une unité de détermination de position qui est conçue pour la détermination d'une position (201) du dispositif de navigation,
une base de données de cartes contenant des données de cartes qui représentent une première pluralité de segments de routes où sont regroupées les routes d'une région, lesdites données de cartes présentant des caractéristiques d'identification de sorte que l'une des caractéristiques d'identification est associée à chacun des segments de routes de la première pluralité de segments de routes,
une base de données de vitesse contenant des données de vitesse qui représentent une deuxième pluralité de segments de routes où sont regroupées les routes de la région, lesdites données de vitesse présentant des informations de vitesse de sorte que l'une des informations de vitesse est associée à chacun des segments de routes de la deuxième pluralité de segments de routes,
une unité de calcul conçue pour la définition d'une zone de sélection (202) située dans la région en tenant compte de la position (201), pour la sélection d'un segment de routes de départ (203) parmi les segments de routes de la première pluralité de segments de routes qui se situent dans la zone de sélection et pour la sélection d'un segment de route de référence (303a, 303b) situé sur le segment de route de départ (203) parmi la deuxième pluralité de segments de route et
une base de données de référence, l'unité de calcul étant conçue pour l'enregistrement de la caractéristique d'identification du segment de routes de départ (203) et de l'information de vitesse du segment de routes de référence (303a, 303b) dans la base de données de référence de sorte que la caractéristique d'identification du segment de routes de départ (203) est mise en lien avec l'information de vitesse du segment de routes de référence (303a, 303b).
